# EUROPEAN PATENT SPECIFICATION

(11) **EP 2 702 642 B1**
(45) Date of publication and mention of the grant of the patent: **30.11.2016**
(21) Application number: 12720468.3
(22) Date of filing: 27.04.2012
(51) Int. Cl.: H01R 13/506, H01R 13/436, H01R 13/424, H01R 107/00, B60L 11/18, H01R 13/52, H01R 13/66

(54) **MULTICONTACT BODY AND ELECTRICAL CONNECTOR DEVICE**
MEHRKONTAKTKÖRPER UND ELEKTRISCHER VERBINDER
CORPS MULTICONTACTS ET CONNECTEUR ÉLECTRIQUE

(30) Priority: 28.04.2011 WO PCT/IB2011/001235
(43) Date of publication of application: 05.03.2014
(73) Proprietor: Delphi International Operations Luxembourg S.à r.l., 4940 Bascharage (LU)
(72) Inventor: DUQUESNE, Arnaud, F-28230 Epernon (FR); MULOT, Gérard, F-28210 Nogent Le Roi (FR); AESCHBACHER, Michel, F-28300 Saint Priest (FR)
(74) Representative: Delphi France SAS
(86) International application number: PCT/EP2012/057867
(87) International publication number: WO 2012/146766

(56) References cited:
- DE-A1- 3 125 089
- US-A- 4 544 220
- US-A- 5 643 009
- US-B1- 6 210 036

## Description

### FIELD OF THE INVENTION

The present invention relates to an electrical connector device. In particular, it relates to an electrical contact and a multicontact body of such electrical connector device as well to an assembly method for assembling an electrical connector assembly.

Some traditional multicontact electrical connector devices comprise a connector body having a plurality of cavities receiving an electrical contact each. The connector body includes a plurality of flexible lugs for retaining each electrical contact in the corresponding cavity. The retention provided by the connector body has to be strong enough to resist to the axial insertion force of the electrical contact with a complementary contact. The correct retention is only provided if the electrical contact is within an axial latching zone with respect to the connector body such that the retention lugs are correctly armed. Outside the latching zone, the movement of the electrical contact with respect to the connector body may be hindered only but not stopped. During the mating operation, said ill-retained electrical contact would be pushed back into the connector body which would prevent reliable electrical connection. However such a mounting default may not always be visually detected by the operator.

To improve that situation, a multicontact connector device may comprise a multicontact rear body including a plurality of through holes surrounding the crimping part of the electrical contact and a plurality of edges extending radially around the holes. The edges stop rearwards a radially protruding flange of the electrical contact. Each contact flange is axially sandwiched between the contact body and the multicontact rear body which can be attached to the connector body when all the electrical contacts are correctly in place.

In that improved connector device, a wrong axial positioning of one of the electrical contacts should prevent a correct attachment of the multicontact rear body together with the connector body. However, that multicontact body may still look like assembled. Therefore, a wrong axial positioning of one electrical contact may still be not visually detectable.

Another draw back of such a connector device is that the electrical contacts are rather expensive. Usually, the electrical contacts are produced by bar turning. The copper alloy bar from which the contact is machined has a diameter corresponding to the outside diameter of the radially protruding flange. As the copper alloy cost increases, there is a need for an electrical contact design requesting less material to form the terminal.

An electrical connector with a multicontact body according to the preamble of claim 1 is also known from document US 5 643 009 A.

The invention provides a multicontact connector device and a rear multicontact body which remedy to at least one of the above drawbacks.

A goal of the invention is to improve the detectability of a wrong positioning of one electrical contact without increasing the contact manufacturing cost.

### SUMMARY OF THE INVENTION

According to one aspect, an electrical connector device comprises: a connector body including a forward direction of a mating axis toward which the connector body is adapted to mate with a complementary electrical connector device.

It also has a plurality of electrical contacts.

It comprises a multicontact rear body, attached to the connector body and comprising for each electrical contact, an individual guiding portion adapted to guide said electrical contact substantially parallel to the mating axis. The individual guiding portion comprises a rearward axial stop adapted to prevent said contact from moving rearwards.

The multicontact rear body is a multicontact holder in which each individual guiding portion comprises a forward axial stop adapted to prevent said contact from moving forwards.

As each electrical contact is totally held and retained by the multicontact rear holder, the correct positioning of the electrical contacts can be visually checked since the contacts are not yet hidden within the connector body. Additionally, as the individual retention mechanism of the electrical contacts is not anymore included in the connector body, there is a wider space and material flexibility for the design. Therefore, the detectability of a wrong positioning is improved and a possibility for a cheaper contact design is open.

According to another aspect, an electrical contact for an electrical connector device comprises a one-piece contact body extending along a contact axis. The contact body includes a front connecting portion adapted to electrically connect a complementary electrical contact.

It includes a back tubular portion being adapted to receive and attach a electrical cable extremity.

It includes a contact holding portion extending axially between the front connecting portion and the back tubular portion, and being adapted to cooperate with an housing of the connector device for being axially held. The contact holding portion comprises an axial stop recess adapted to receive a rearward axial stop and a forward axial stop of the connector housing.

Thanks to such an axial stop which is a recess and not a radially protruding flange, the copper alloy bar diameter from which the contact is machined is reduced.

A multicontact body for an electrical connector device, comprising an attachment member adapted to cooperate with a connector body of an electrical connector which mates with a complementary electrical connector device for immobilizing the multicontact holder with respect to the connector body.

It comprises a plurality of individual guiding portions.

These guiding portions including each a guiding surface adapted to guide one electrical contact of the electrical connector device along a guiding axis, and a first axial stop adapted to prevent said electrical contact from moving into said electrical connector device towards a first direction of the guiding axis.

The multicontact body is a multicontact holder in which each individual guiding portion includes a second axial stop adapted to prevent said electrical contact from moving in a second direction of the guiding axis opposite the first direction.

Such a multicontact body makes the correct positioning of the electrical contacts easier to be visually checked and opens the possibility to a cheaper contact design.

According to another aspect, an assembly method for assembling an electrical connector assembly comprises the step of assembling a plurality of electrical contact assemblies, each electrical contact assembly being assembled by attaching an electrical contact to an extremity of an electrical wire or cable. It comprises a step of first, assembling a multicontact sub-assembly by attaching each electrical contact assembly within one multicontact holder and then, attaching the multicontact sub-assembly with a connector body.

The first step opens the possibility to use a cheaper electrical contact. The second step opens the possibility to provide an improved mistake-proofing mechanism.

In some other embodiments, one might also use one or more of the features as defined in dependent claims.

### BRIEF DESCRIPTION OF THE DRAWINGS

Other characteristics and advantages of the invention will readily appear from the following description of some of its embodiments, provided as a non-limitative example, and of the accompanying drawings.

On the drawings:
- Figure 1 is a perspective view of a connector device, viewed from the front side.
- Figure 2 is a cut view of the connector device following the plan II-II of the figure 1 passing by two electrical contacts, showing a guiding portion of the multicontact rear body.
- Figure 2a is a detail view of figure 2.
- Figure 3 is a perspective view of a

multicontact subassembly showing three covering plates delimiting a shared portion of three ventilation ducts.
- Figure 4 is a perspective view of the connector body, viewed from the rear side, showing the front size of a shared portion of three ventilation ducts.
- Figures 4a et 4b are detail views of figure 4.
- Figure 5 is a side view of the connector device following arrow V of the figures 1 and 6.
- Figure 6 is a back view of the multicontact rear body.
- Figure 7 is a partial cut view of a lateral cavity provided with a ventilation duct following the plan VII of figures 1 and 4, 6.
- Figure 8 is a partial cut view of a peripheric cavity following the plan VIII-VIII of figures 1, 5, 6.

### DETAILED DESCRIPTION

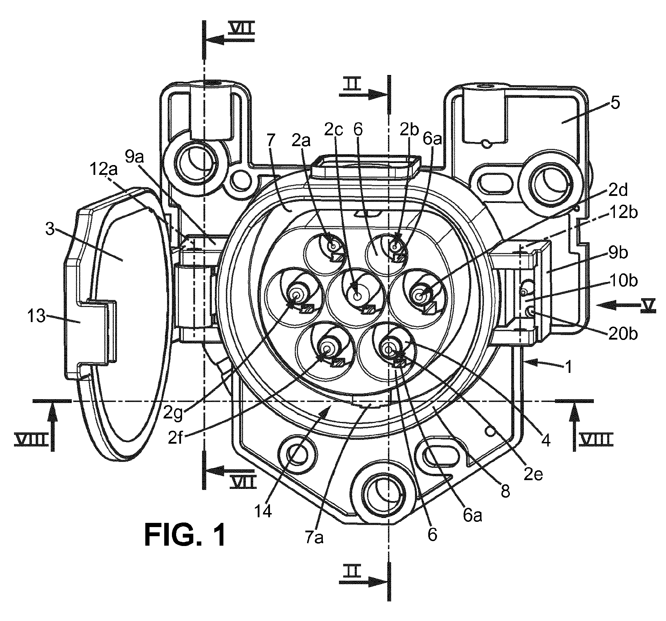

As illustrated in figure 1, the connector device comprises a connector body 1, seven electrical contacts 2a, 2b, 2c, 2d, 2e, 2f, 2g and a shutter 3. Each electrical contact 2a-2g has a connecting portion 4 of a male type. In a variant, the connecting portion could be either of a male type or of a female type. The number of electrical contacts may be any number. The electrical contacts 2a-2g can be of different types. For example, the contact 2a, 2b can be low power or signal contacts. The contact 2c could be a ground contact. The contacts 2d, 2e, 2f, 2g could be electrical power contacts adapted for high intensity current for charging electricity powered vehicles.

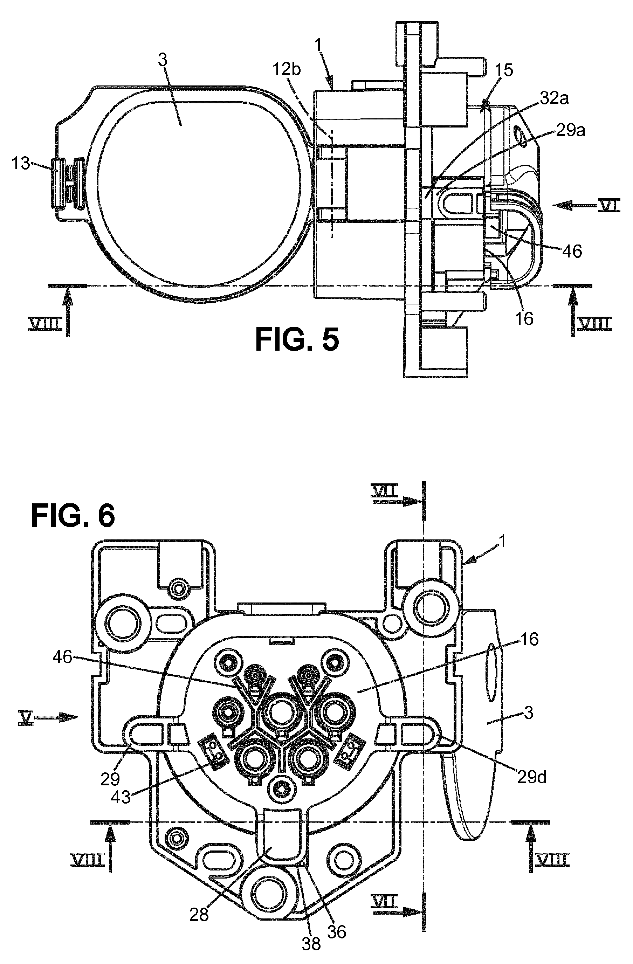

The connector body 1 comprises a panel flange 5 which is a fixation element 5 adapted to fix the connector body 1 to a panel not illustrated in the figure. The panel comprises a through hole through which the connector body is passing. The panel flange 5 defines the front side of the connector device (figure 1) and the back side (figure 6).

The connector body 1 comprises a plurality of contact cavities 6 surrounding the connecting portion 4 of the corresponding contact 2a-2g. The connector body 1 further comprises a peripheral cavity 7 surrounding all the contacts cavities 6. Both the contact cavities 6 and the peripheral cavity 7 are open to the front side of the connector device in order to receive a complementary part of a complementary connector. Each of the cavities 6, 7 comprise a hole duct 6a, 7a opening at the bottom corner of the corresponding cavity.

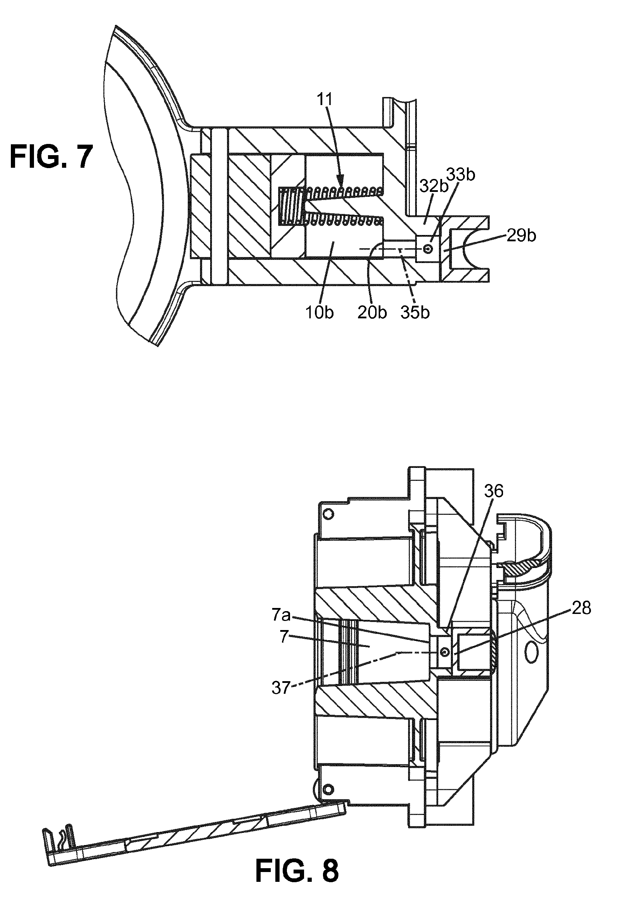

The connector body 1 comprises a peripheral wall 8 surrounding the peripheral cavity 7. Two lateral walls 9a, 9b protrude outside the peripheral wall 8 respectively at the left end and at the right end the peripheral wall 8 and surround two lateral cavities 10a, 10b. The left cavity 10a receives a spring mechanism 11 (visible in figure 7). A left axis 12a is vertically fixed to the lateral wall 9a. The shutter 3 is rotatably mounted around the left axis 12a. A right axis (not represented) is vertically fixed to the right wall 9b. The shutter 3 is provided with a spring clip 13 which cooperates with the right axis to maintain the shutter 3 in a closed position. The shutter 3 covers the peripheral wall 8 and hermetically seals a front inner room 14 on which opens all the cavities 6 and 7. The front inner room 14 communicates with a front side atmosphere only temporarily when the shutter 3 is open and when the complementary connector is not yet mated to the connector device. Therefore, the front inner room 14 is most of the time isolated from the front side atmosphere. The condensation within the front inside room 14 can be dried via ventilation ducts which extend from the bottom holes 6a, 7a towards the rear side atmosphere.

In a variant, a shutter may be rotatably mounted on the right axis 12b and clipped on the left axis 12a.

Both lateral cavities 10a, 10b are also provided with a bottom hole 20a, 20b at the bottom corner of the respective cavity 10a, 10b.

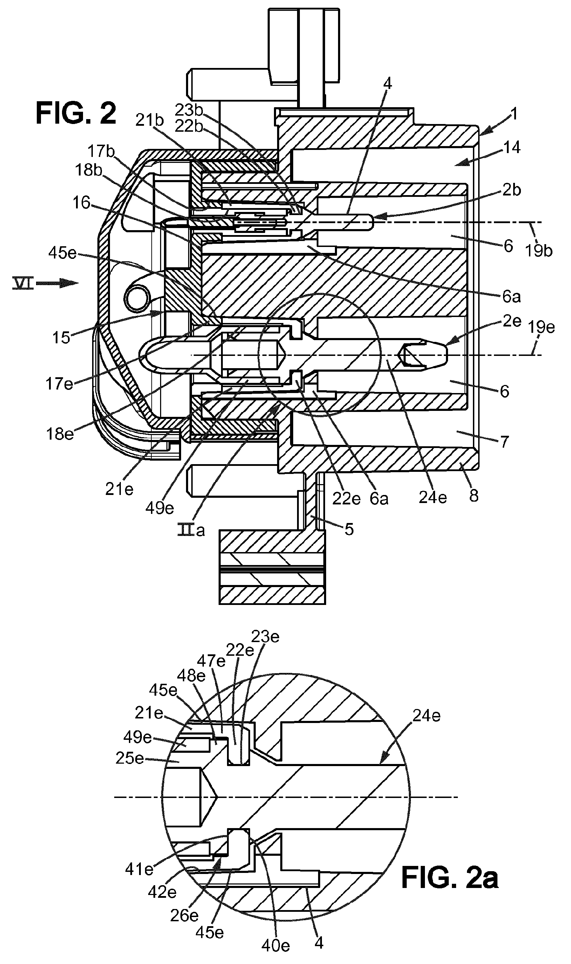

As illustrated by figure 2, the connector device further comprises a multicontact rear body 15 which covers a back side of the connector body 1. The multicontact rear body 15 comprises a bottom wall 16 and a plurality of guiding portions 17a, 17e extending upwardly from the bottom wall 16. Each of the guiding portions 17b, 17e, comprises an inner cylindrical guiding surface 18b, 18e receiving and guiding the respective electrical contact 2b, 2e along a contact axis 19b, 19e.

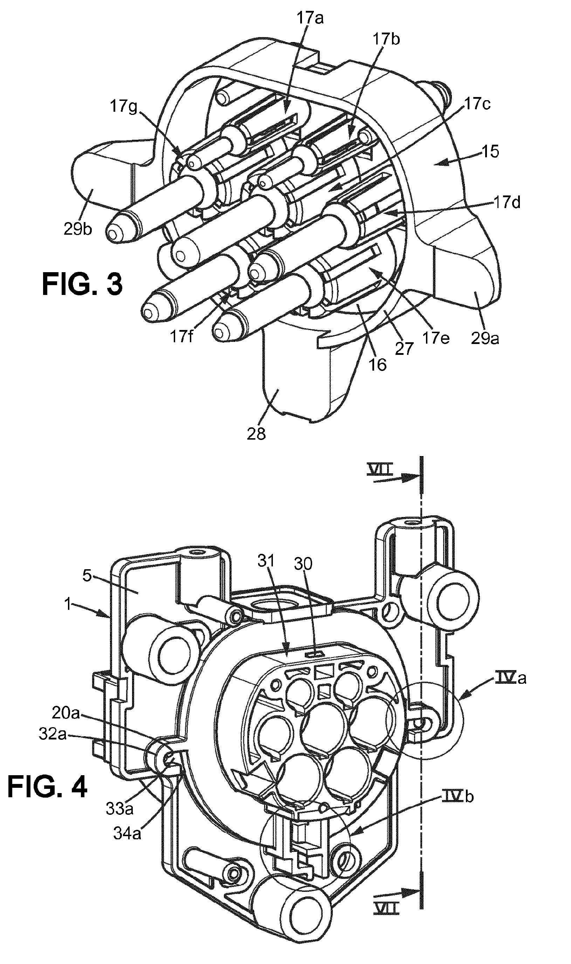

As illustrated in figures 2 and 3, each of the guiding portions 17b, 17e is provided with six spring arms 21b, 21e surrounding the electrical contact 2b, 2e. Each spring arm 21b, 21e comprises a locking projection 22b, 22e which protrudes radially inside the guiding surface 18b, 18e and enters into an axial stop recess 23b, 23e of the electrical contact 2b, 2e. The axial stop recess 23b, 23e is an annular groove opening radially outwards.

In a variant, the number of spring arms may be any number and may be different for each guiding portion.

As illustrated in figure 2a, the power contact 2e comprises a contact body 24e which is a single-block piece part, machined by bar turning. The contact body 24e comprises a back tubular portion 25e into which the cable wire extremity is soldered. The back tubular portion 25e is at the opposite extremity of the contact body 24e with respect to the connecting portion 4.

The contact body 24e further comprises a holding portion 26e extending axially between the back tubular portion 25e and the connecting portion 4. The annular groove 23e is provided on the holding portion 26e. The holding portion 26e extends radially inside the outside diameter of the back tubular portions 25e. So, the diameter of the bar, from which the contact body 24 is machined, corresponds to the outside diameter of the back tubular portion 25e.

The contact body 24e further comprises a guiding shoulder 48e extending axially at the back of the axial step recess 23e and extending radially further the back tubular portion 25e. The spring arm 21e may also comprises an inner guiding shoulder 47e arranged to cooperate with the guiding shoulder 48e. This provides a more precise coaxial guiding of the contact 2e close to the holding portion 26e. This allows the contact 2e to slightly rotate around the holding portion 26e. The guiding shoulders 47e or 48e also provide an axial stop to a cable guiding bending member 49e.

As illustrated in the figures 3, 5, 6, 8, the multicontact rear body 15 further comprises a peripheric wall 27 as well as a bottom plate 28 and two lateral plates 29a, 29b. The plates 28, 29a, 29b extend radially outwardly from the peripheral wall 27.

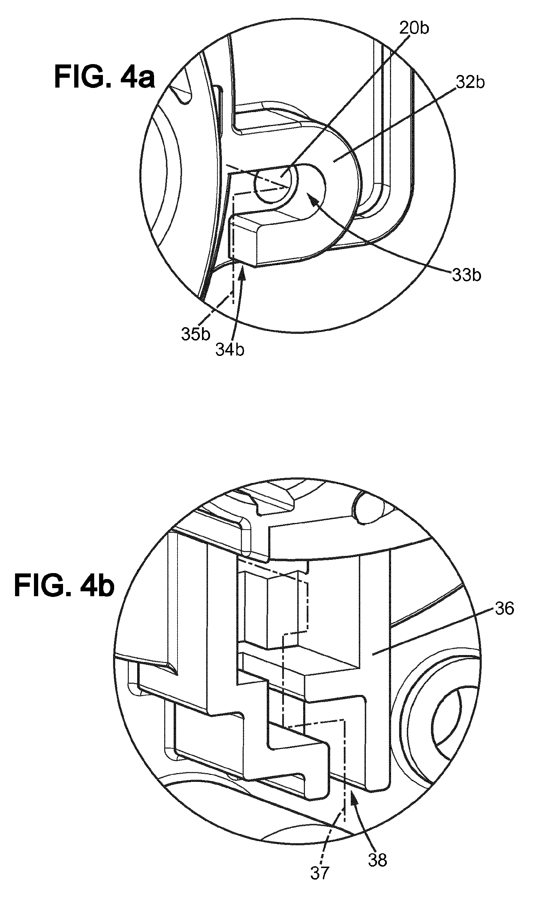

As illustrated in the figures 3, 4, the peripheral wall 27 cooperates with a retention element 30 radially protruding from a rear axial protrusion 31 of the connector body 1 for attaching the multicontact body 15 to the connector body 1.

As illustrated in the figures 2, 2a, 3, the assembly method comprises a first step of assembling a sub assembly illustrated in Figure 3. The wire extremity is soldered in the back tubular portion 25e and all the contacts are assembled in a similar way. All the contact assemblies are introduced into the corresponding guiding surface 18e. During the axial introduction of the contact, the locking projections 22e of the guiding portion 17e are deflected radially outwards to a biased position until the contact reaches an axial position in which the locking projections 22e are aligned with the axial stop recess 23e. Then, the locking projections 22e automatically spring back radially inwards due to the elasticity of the spring arm 21e.

The front side of the locking projections 22e constitutes a rearward axial stop 40e which prevents the contact 2e from moving rearwards. The backside of the locking projection 22e constitutes a forward axial stop 41e which prevents the contact 2e from moving forwards. The rearward axial stop 40e and the forward axial stop 41e cooperate with the axial stop recess 23e to hold axially the contact 2e in both directions of the contact axis 19e. Additionally, the spring arm 21e comes back in a position compatible with the introduction into the receiving cavity 42e of the connector body 1. The other contact assemblies are introduced in the multicontact rear holder 15 in a similar way.

In a second step, the sub assembly is introduced in the connector body 1 and the bead 30 and the elastic peripheral wall 27 attach the sub assembly with the connector body 1.

In the case where the contact is not fully inserted in its final position, at least one of the locking projections 22e cannot enter the axial stop recess 23e and thereby the introduction of the guiding portion 17e into the receiving cavity 42e is made impossible. The spring arm 21e acts as a mistake-proofing mechanism. The fact that the locking projection does not correctly cooperate with the axial stop recess of the contact during the first step is directly transformed into a stop which makes the second step impossible.

As illustrated in the figures 4, 4a, the connector body 1 comprises rear protrusions 32a, 32b extending backwards from the panel flange 5, parallel to the mating axis of the connector device. Each of the rear protrusions 32a, 32b delimits a lateral rear chamber 33a, 33b encompassing the bottom hole 20a, 20b. Once the connector is assembled, the lateral rear chamber is covered by the lateral plates 29a, 29b and is opened to the rear side atmosphere by a lateral outlet 34a, 34b. Therefore, when the multicontact rear body 15 is attached to the connector body 2, the connector device is provided with two lateral ventilation ducts 35a, 35b extending each from the corresponding bottom hole 20a, 20b, passing through the lateral rear chamber 33a, 33b. Said lateral ventilation ducts 35a,35B are in communication with the rear side atmosphere via the lateral outlet 34a, 34b.

The lateral outlet 34a, 34b opens downwards and is laterally shifted with respect to the bottom hole 20a, 20b (see figure 4a). The ventilation duct 35a, 35b comprises baffle means, formed by a portion of the rear protrusion, which allows increasing the residence time of the air flow from the front side atmosphere to the rear side atmosphere and thereby slowdowns the dust flow through the duct. The lateral rear cavity 33a, 33b is a shared portion 33a, 33b of the path of the ventilation duct 35a, 35b which is delimited, for the rear side by the multicontact body 15, and for the lateral and front side by the connector body 2.

As illustrated in the figures 4, 4b, the connector body 1 further comprises a bottom rear protrusion 36 extending backwards, parallel to the mating axis and forming a baffle means for the ventilation duct 37. The ventilation duct 37 extends from the peripheric bottom hole 7a to an outlet 38. The portion of the path of the ventilation duct 37 delimited for the rear side by the bottom plate 28 and for the lateral and front side by the connector body 1 is a shared portion 39 of the ventilation duct 37. The shared portion 39 extends along a path having a zigzag shape and extends along a plane which is perpendicular to the mating axis.

## Claims

1. Multicontact body (15) for electrical connector device, comprising:
- an attachment member (27) adapted to cooperate with a connector body (1) of an electrical connector which mates with a complementary electrical connector device for immobilizing the multicontact (15) holder with respect to the connector body (1).
- a plurality of individual guiding portions (17e) including each:
* a guiding surface (18e) adapted to guide one electrical contact of the electrical connector device along a guiding axis, and
* a first axial stop (40e) adapted to prevent said electrical contact (2e) from moving into said electrical connector device towards a first direction of the guiding axis,
wherein the multicontact body (15) is a multicontact holder (15) in which each individual guiding portion (17e) includes a second axial stop (41e) adapted to prevent said electrical contact (2e) from moving in a second direction of the guiding axis opposite the first direction, wherein each guiding portion (17e) comprises a spring arm (21e) having a free end provided with a locking projection (22e) which includes said first and second axial stops (40e, 41e) and wherein the locking projection (22e) is radially movable between a biased position in which the locking projection radially extends totally outside the guiding surface (42e) of the corresponding guiding portion (17e), and a stopping position in which the locking projection (22e) radially extends at least partially inside said guiding surface (42e), so as to be adapted to radially enter in an axial stop recess (23e) of an electrical contact (2e), **characterized in that** the spring arm (21e) comprises an inner guiding shoulder (47e) arranged to cooperate with a guiding shoulder (48e) provided on a contact body (24e) of said contact (2e).

2. Multicontact body (15) according to claim 1, comprising:
- an assembling surface (45e) by which the multicontact body (15) can be assembled together with the connector body (1) and
- a mistake-proofing mechanism (21e) adapted to prevent the assembling surface (45e) from cooperating with the connector body (1), at least one of the first and second axial stops (40e, 41e) being movable and adapted to action the mistake-proofing mechanism (21e).

3. Multicontact body according to the claims 1 and 2 together, wherein the assembling surface (45e) includes the radially outside surface of each guiding portion (17e) when the locking projection (22e) of the spring arms (21e) are in the stopping position and wherein the mistake-proofing mechanism is provided with the spring arm (21e) in the biased position.

4. Multicontact body (15) according to any of the claims 1 to 3, comprising a bottom wall (16) from which the individual guiding portions (17e) extend, and further comprises at least one cable guide (46) axially protruding backwards from the bottom wall (16).

5. Electrical connector device, comprising:
- a connector body (1) including a forward direction of a mating axis toward which the connector body (1) is adapted to mate with a complementary electrical connector device,
- a plurality of electrical contacts (2e),
- a multicontact rear body (15) according to one of the preceding claims, attached to the connector body (1) and comprising for each electrical contact (2e), an individual guiding portion (17e) adapted to guide said electrical contact (2e) substantially parallel to the mating axis, said individual guiding portion (17e) comprising a rearward axial stop (40e) adapted to prevent said contact (2e) from moving rearwards.

6. Connector device according to claim 5, wherein the connector body (1) comprises a plurality of receiving cavities (42a) being each large enough to receive one of the individual guiding portions (17e) when the locking projection (22e) of the spring arm (21e) of the corresponding individual guiding portion is in the stopping position, wherein each of the receiving cavities (42e) is adapted to prevent the corresponding guiding portion (17e) from entering into said cavity (42e) when the corresponding locking projection (22e) is in a wrongly latch radial position in which said locking projection (22e) touches the corresponding electrical contact (2e) by a zone other than the axial stop recess (23e).

7. Connector device according to claim 6, comprising an attachment mechanism (27-30) adapted to attach the multicontact holder (15) and the connector body (1) together in a relative axial latch position when all the guiding portions (17e) enter into the corresponding cavity (42e) and is adapted to leave the multicontact holder (15) axially free from the connector body (1) when at least one guiding portion (17e) is not entered into the corresponding cavity (42e).

8. Connector device according to any of the claims 5 to 7, wherein the locking projection (22e) is movable between the stopping position and a biased position in which the locking projection radially extends totally further an outside diameter of the corresponding electrical contact (2e).

9. Connector device according to any of the claims 5-8, wherein at least one of the electrical contacts (2e) comprises a one-piece contact body (24e) extending along a contact axis, the contact body (24e) including:
- a front connecting portion (4) adapted to electrically connect a complementary electrical contact,
- a back tubular portion (25e) being adapted to receive and attach a electrical wire extremity, and
- a contact holding portion (26e) extending axially between the front connecting portion (4) and the back tubular portion (25e) and being adapted to cooperate with an housing (1-15) of the connector device for being axially hold,
the contact holding portion (26e) comprising an axial stop recess (23e) adapted to receive a rearward axial stop (40e) and a forward axial stop (41e) of the connector housing (1-15).

10. Connector device according to claim 9, wherein the axial stop recess (23e) is an annular groove.

11. Connector device according to claim 9 or 10, wherein the contact holding portion (26e) of contact body (1) radially extends inside an outside diameter of the back tubular portion (25e).

## Patentansprüche

1. Mehrfachkontaktkörper (15) für eine elektrische Verbindungsvorrichtung, der aufweist:
- ein Befestigungselement (27), das ausgebildet ist zum Kooperieren mit einem Verbinderkörper (1) eines elektrischen Verbinders, der mit einer komplementären elektrischen Verbindungsvorrichtung zusammengefügt wird, zum Immobilisieren des Mehrfachkontakt(15)-Halters in Bezug auf den Verbinderkörper (1);
- eine Vielzahl von einzelnen Führungsabschnitten (17e), die jeweils umfassen:
* eine Führungsoberfläche (18e), die ausgebildet ist zum Führen eines elektrischen Kontakts der elektrischen Verbindungsvorrichtung entlang einer Führungsachse, und
* einen ersten axialen Anschlag (40e), der ausgebildet ist zum Verhindern, dass sich der elektrische Kontakt (2e) in die elektrische Verbindungsvorrichtung hin zu einer ersten Richtung der Führungsachse bewegt,
wobei der Mehrfachkontaktkörper (15) ein Mehrfachkontakthalter (15) ist, bei dem jeder einzelne Führungsabschnitt (17e) einen zweiten axialen Anschlag (41e) umfasst, der ausgebildet ist zum Verhindern, dass sich der elektrische Kontakt (2e) in eine zweite Richtung der Führungsachse entgegengesetzt zu der ersten Richtung bewegt, wobei jeder Führungsabschnitt (17e) einen Federarm (21e) mit einem freien Ende aufweist, das mit einem Verriegelungsvorsprung (22e) versehen ist, der die ersten und zweiten axialen Anschläge (40e, 41e) umfasst, und wobei der Verriegelungsvorsprung (22e) radial zwischen einer vorgespannten Position, in der sich der Verriegelungsvorsprung radial vollständig außerhalb der Führungsoberfläche (42e) des entsprechenden Führungsabschnitts (17e) erstreckt, und einer Anschlagsposition bewegbar ist, in der sich der Verriegelungsvorsprung (22e) radial zumindest teilweise innerhalb der Führungsoberfläche (42e) erstreckt, um so ausgebildet zu sein, radial in eine axiale Anschlagsvertiefung (23e) eines elektrischen Kontakts (2e) eingeführt zu werden,
**dadurch gekennzeichnet, dass**
der Federarm (21e) eine innere Führungsschulter (47e) aufweist, die ausgebildet ist zum Kooperieren mit einer Führungsschulter (48e), die an einem Kontaktkörper (24e) des Kontakts (2e) vorgesehen ist.

2. Mehrfachkontaktkörper (15) gemäß Anspruch 1, der aufweist:
- eine Zusammenfügen-Oberfläche (45e), über die der Mehrfachkontaktkörper (15) mit dem Verbinderkörper (1) zusammengefügt werden kann, und
- einen Fehlersicherungsmechanismus (21e), der ausgebildet ist zum Verhindern, dass die Zusammenfügen-Oberfläche (45e) mit dem Verbinderkörper (1) kooperiert, wobei zumindest einer der ersten und zweiten axialen Anschläge (40e, 41 e) bewegbar ist und ausgebildet ist, den Fehlersicherungsmechanismus (21e) zu betätigen.

3. Mehrfachkontaktkörper gemäß den Ansprüchen 1 und 2 zusammen, wobei die Zusammenfügen-Oberfläche (45e) die radial äußere Oberfläche jedes Führungsabschnitts (17e) umfasst, wenn der Verriegelungsvorsprung (22e) der Federarme (21e) in der Anschlagsposition ist, und wobei der Fehlersicherungsmechanismus mit dem Federarm (21e) in der vorgespannten Position vorgesehen ist.

4. Mehrfachkontaktkörper (15) gemäß einem der Ansprüche 1 bis 3, der eine untere Wand (16) aufweist, von der sich die einzelnen Führungsabschnitte (17e) erstrecken, und weiter zumindest eine Kabelführung (46) aufweist, die axial nach hinten von der unteren Wand (16) herausragt.

5. Elektrische Verbindungsvorrichtung, die aufweist:
- einen Verbinderkörper (1) mit einer Vorwärtsrichtung einer Verbindungsachse, in deren Richtung der Verbinderkörper (1) ausgebildet ist, mit einer komplementären elektrischen Verbindungsvorrichtung zusammengefügt zu werden,
- eine Vielzahl von elektrischen Kontakten (2e),
- einen hinteren Mehrfachkontaktkörper (15) gemäß einem der vorhergehenden Ansprüche, der an dem Verbinderkörper (1) angebracht ist und für jeden elektrischen Kontakt (2e) einen einzelnen Führungsabschnitt (17e) aufweist, der ausgebildet ist zum Führen des elektrischen Kontakts (2e) im Wesentlichen parallel zu der Verbindungsachse, wobei der einzelne Führungsabschnitt (17e) einen hinteren axialen Anschlag (40e) aufweist, der ausgebildet ist zum Verhindern, dass sich der Kontakt (2e) nach hinten bewegt.

6. Verbindungsvorrichtung gemäß Anspruch 5, wobei der Verbinderkörper (1) eine Vielzahl von Aufnahmehohlräumen (42a) aufweist, die jeweils groß genug sind zum Aufnehmen eines der einzelnen Führungsabschnitte (17e), wenn der Verriegelungsvorsprung (22e) des Federarms (21e) des entsprechenden einzelnen Führungsabschnitts in der Anschlagsposition ist, wobei jeder der Aufnahmehohlräume (42e) ausgebildet ist zum Verhindern, dass der entsprechende Führungsabschnitt (17e) in den Hohlraum (42e) eingeführt wird, wenn der entsprechende Verriegelungsvorsprung (22e) in einer falschen radialen Verriegelungsposition ist, in der der Verriegelungsvorsprung (22e) den entsprechenden elektrischen Kontakt (2e) durch eine Zone berührt, die von der axialen Anschlagsvertiefung (23e) verschieden ist.

7. Verbindungsvorrichtung gemäß Anspruch 6, die einen Befestigungsmechanismus (27-30) aufweist, der ausgebildet ist zum Befestigen des Mehrfachkontakthalters (15) und des Verbinderkörpers (1) zusammen in einer relativen axialen Verriegelungsposition, wenn alle Führungsabschnitte (17e) in den entsprechenden Hohlraum (42e) eingeführt werden, und ausgebildet ist, den Mehrfachkontakthalter (15) axial frei von dem Verbinderkörper (1) zu lassen, wenn zumindest ein Führungsabschnitt (17e) nicht in den entsprechenden Hohlraum (42e) eingeführt ist.

8. Verbindungsvorrichtung gemäß einem der Ansprüche 5 bis 7, wobei der Verriegelungsvorsprung (22e) zwischen der Anschlagsposition und einer vorgespannten Position bewegbar ist, in der sich der Verriegelungsvorsprung radial vollständig weiter als ein Außendurchmesser des entsprechenden elektrischen Kontakts (2e) erstreckt.

9. Verbindungsvorrichtung gemäß einem der Ansprüche 5-8, wobei zumindest einer der elektrischen Kontakte (2e) einen einteiligen Kontaktkörper (24e) aufweist, der sich entlang einer Kontaktachse erstreckt, wobei der Kontaktkörper (24e) umfasst:
- einen vorderen Verbindungsteil (4), der ausgebildet ist zum elektrischen Verbinden eines komplementären elektrischen Kontakts,
- einen hinteren röhrenförmigen Teil (25e), der ausgebildet ist zum Aufnehmen und Befestigen eines Endes eines elektrischen Drahts, und
- einen Kontakthalteteil (26e), der sich axial zwischen dem vorderen Verbindungsteil (4) und dem hinteren röhrenförmigen Teil (25e) erstreckt und ausgebildet ist, mit einem Gehäuse (1-15) der Verbindungsvorrichtung zu kooperieren, um axial gehalten zu werden,
wobei der Kontakthalteteil (26e) eine axiale Anschlagsvertiefung (23e) aufweist, die ausgebildet ist zum Aufnehmen eines hinteren axialen Anschlags (40e) und eines vorderen axialen Anschlags (41e) des Verbindergehäuses (1-15).

10. Verbindungsvorrichtung gemäß Anspruch 9, wobei die axiale Anschlagsvertiefung (23e) eine ringförmige Rille ist.

11. Verbindungsvorrichtung gemäß Anspruch 9 oder 10, wobei sich der Kontakthalteteil (26e) des Kontaktkörpers (1) radial innerhalb eines Außendurchmessers des hinteren röhrenförmigen Teils (25e) erstreckt.

## Revendications

1. Corps multicontacts (15) pour dispositif connecteur électrique, comprenant :
- un élément d'attache (27) adapté à coopérer avec un corps de connecteur (1) d'un connecteur électrique qui s'accouple avec un dispositif connecteur électrique complémentaire afin d'immobiliser le support multicontacts (15) par rapport au corps de connecteur (1),
- une pluralité de portions de guidage individuelles (17e) incluant chacune :
- une surface de guidage (18e) adaptée à guider un contact électrique du dispositif connecteur électrique le long d'un axe de guidage, et
- un premier arrêt axial (40e) adapté à empêcher que ledit contact électrique (2e) se déplace vers l'intérieur dudit dispositif connecteur électrique en direction d'une première direction de l'axe de guidage, dans lequel le corps multicontacts (15) est un support multicontacts (15) dans lequel chaque portion de guidage individuelle (17e) inclut un deuxième arrêt axial (41e) adapté à empêcher audit contact électrique (2e) de se déplacer dans une deuxième direction de l'axe de guidage opposée à la première direction, dans lequel chaque portion de guidage (17e) comprend un bras à ressort (21e) ayant une extrémité libre équipée d'une projection de blocage (22e) qui inclut ledit premier et ledit deuxième arrêt axial (40e, 41e) et dans lequel la projection de blocage (22e) est déplaçable radialement entre une position sollicitée dans laquelle la projection de blocage s'étend radialement entièrement à l'extérieur de la surface de guidage (42e) de la portion de guidage correspondante (17e), et une position d'arrêt dans laquelle la projection de blocage (22e) s'étend radialement au moins partiellement à l'intérieur de ladite surface de guidage (42e), de façon à être adaptée à entrer radialement dans un évidement d'arrêt axial (23e) d'un contact électrique (2e),
**caractérisé en ce que** le bras à ressort (21e) comprend un épaulement de guidage intérieur (47e) agencé pour coopérer avec un épaulement de guidage (48e) prévu sur un corps de contact (24e) dudit contact (2e).

2. Corps multicontacts (15) selon la revendication 1, comprenant :
- une surface d'assemblage (45e) par laquelle le corps multicontacts (15) peut être assemblé ensemble avec le corps de connecteur (1), et
- un mécanisme de contrôle d'erreur (21e) adapté à empêcher à la surface d'assemblage (45e) de coopérer avec le corps de connecteur (1), l'un au moins du premier arrêt et deuxième arrêt axial (40e, 41e) étant déplaçable et adapté à actionner le mécanisme de contrôle d'erreur (21 e).

3. Corps multicontacts selon les revendications 1 et 2 ensemble, dans lequel la surface d'assemblage (45e) inclut la surface radialement extérieure de chaque portion de guidage (17e) quand les projections de blocage (22e) des bras à ressort (21e) sont dans la position d'arrêt, et dans lequel le mécanisme de contrôle d'erreur est prévu avec le bras à ressort (21e) dans la position sollicitée.

4. Corps multicontacts (15) selon l'une quelconque des revendications 1 à 3, comprenant une paroi inférieure (16) depuis laquelle s'étendent les portions de guidage individuelles (17e), et comprend en outre au moins un guide de câble (46) se projetant axialement en arrière depuis la paroi inférieure (16).

5. Dispositif connecteur électrique, comprenant :
un corps de connecteur (1) incluant une direction d'avance d'un axe d'accouplement vers laquelle le corps de connecteur (1) est adapté à s'accoupler avec un dispositif connecteur électrique complémentaire,
- une pluralité de contacts électriques (2e),
- un corps arrière multicontacts (15) selon l'une quelconque des revendications précédentes, attaché au corps de connecteur (1) et comprenant, pour chaque contact électrique (2e), une portion de guidage individuelle (17e) adaptée à guider ledit contact électrique (2e) sensiblement parallèlement à l'axe d'accouplement, ladite portion de guidage individuelle (17e) comprenant un arrêt axial postérieur (40e) adapté à empêcher audit contact (2e) de se déplacer vers l'arrière.

6. Dispositif connecteur selon la revendication 5, dans lequel le corps de connecteur (1) comprend une pluralité de cavités de réception (42a) dont chacune est suffisamment grande pour recevoir l'une des portions de guidage individuelle (17e) quand la projection de blocage (22e) du bras à ressort (21e) de la portion de guidage individuelle correspondante est dans la position d'arrêt, dans lequel chacune des cavités de réception (42e) est adaptée à empêcher à la portion de guidage correspondante (17e) d'entrer dans ladite cavité (42e) quand la projection de blocage correspondante (22e) est dans une position radiale de verrouillage erronée dans laquelle ladite projection de blocage (22e) touche le contact électrique correspondant (2e) par une zone autre que l'évidement d'arrêt axial (23e).

7. Dispositif connecteur selon la revendication 6, comprenant un mécanisme d'attache (27-30) adapté à attacher le support multicontacts (15) et le corps de connecteur (1) ensemble dans une position de verrouillage axial relative quand toutes les portions de guidage (17e) entrent dans la cavité correspondante (42e), et est adapté à quitter le support multicontacts (15) axialement libre vis-à-vis du corps de connecteur (1) quand au moins une portion de guidage (17e) n'est pas entrée dans la cavité correspondante (42e).

8. Dispositif connecteur selon l'une quelconque des revendications 5 à 7, dans lequel la projection de blocage (22e) est déplaçable entre la position d'arrêt et une position sollicitée dans laquelle la projection de blocage s'étend radialement entièrement plus loin qu'un diamètre extérieur du contact électrique correspondant (2e).

9. Dispositif connecteur selon l'une quelconque des revendications 5 à 8, dans lequel l'un au moins des contacts électriques (2e) comprend un corps de contact (24e) d'une seule pièce, s'étendant le long d'un axe de contact, le corps de contact (24e) incluant :
- une portion de connexion avant (4) adaptée à connecter électriquement un contact électrique complémentaire,
- une portion tubulaire arrière (25e) qui est adaptée à recevoir et à attacher une extrémité d'un fil électrique, et
- une portion de maintien de contact (26e) s'étendant axialement entre la portion de connexion avant (4) et la portion tubulaire arrière (25e) et étant adaptée à coopérer avec un boîtier (1-15) du dispositif connecteur pour être maintenue axialement,
la portion de maintien de contact (26e) comprenant un évidement d'arrêt axial (23e) adapté à recevoir un arrêt axial arrière (40e) et un arrêt axial avant (41e) du boîtier de connecteur (1-15).

10. Dispositif connecteur selon la revendication 9, dans lequel l'évidement d'arrêt axial (23e) est une gorge annulaire.

11. Dispositif connecteur selon la revendication 9 ou 10, dans lequel la portion de maintien de contact (26e) du corps de contact (1) s'étend radialement à l'intérieur d'un diamètre extérieur de la portion tubulaire arrière (25e).
